# EUROPÄISCHE PATENTANMELDUNG

(11) **EP 4 588 688 A1**
(43) Veröffentlichungstag der Anmeldung: **23.07.2025**
(21) Anmeldenummer: 25152192.8
(22) Anmeldetag: 16.01.2025
(51) Int. Cl.: B60B 21/12, B60C 23/00, B62J 45/423, B60C 23/04

(54) **FAHRRADFELGE**

(30) Priorität: 16.01.2024 DE 202024100187 U
(71) Anmelder: Canyon Bicycles GmbH, 56073 Koblenz (DE)
(72) Erfinder: Rüter, Caspar, 50677 Köln (DE); Jrab, Mazen, 60598 Frankfurt (DE); Debelak, Kyle, 70180 Stuttgart (DE)
(74) Vertreter: dompatent von Kreisler Selting Werner - Partnerschaft von Patent- und Rechtsanwälten mbB

(57) **Zusammenfassung**

Eine Fahrradfelge weist ein Felgenbett (14) auf, das mit Felgenwände (10) verbunden ist. Mit dem Felgenbett (14) ist ein Drucksensor (22) verbunden. Der Drucksensor (22) ist elektrisch mit einer NFC-Antenne (28) zur kontaktlosen Übertragung von Daten und zum kontaktlosen Empfangen von Energie verbunden.

## Beschreibung

Die Erfindung betrifft eine Fahrradfelge.

Um den Druck in einem Fahrradreifen, d.h. in einem schlauchlosen Mantel oder in einem innerhalb eines Mantels angeordneten Schlauchs zu messen, ist es beispielsweise bekannt, einen entsprechenden Drucksensor mit dem Ventil zu verbinden. Hierzu ist es erforderlich den Drucksensor beispielsweise über einen Schlauch auf das Ventil aufzuschrauben, um sodann den Druck auf einem Manometer oder dergleichen ablesen zu können. Ferner weist eine derartige Vorrichtung den Nachteil auf, dass diese zusätzlich vom Benutzer mitgeführt werden muss, um beispielsweise auch auf einer längeren Fahrradtour den Reifendruck messen zu können. Ferner ist von der Firma Tubolito ein Schlauch für einen Fahrradreifen bekannt, in dem ein Drucksensor integriert ist. Der Drucksensor ist mit einer NFC-Antenne verbunden, sodass über die NFC-Antenne der Druck kontaktlos an eine externe Empfangseinrichtung, wie ein Mobiltelefon übermittelt werden kann. Dieses System weist allerdings den Nachteil auf, dass es sich bei einem Fahrradschlauch um ein Ersatzteil handelt und insofern stets zusammen mit dem Schlauch auch der Drucksensor und die NFC-Antenne ausgetauscht werden muss. Insofern ist dieses Produkt teuer und nicht nachhaltig. Ferner handelt es sich um ein Schlauchsystem, das insofern für moderne schlauchlose Reifen nicht geeignet ist.

Aufgabe der Erfindung ist es die Druckmessung bei Fahrradreifen zu verbessern.

Die Lösung der Aufgabe erfolgt erfindungsgemäß durch eine Fahrradfelge mit Drucksensor mit den Merkmalen des Anspruchs 1.

Die erfindungsgemäße Fahrradfelge weist, entsprechend einer üblichen Felge, ein Felgenbett und mit dem Felgenbett verbundene Felgenwände auf. Die Felgenwände bilden auch die Felgenhörner aus oder gehen in die Felgenhörner über, die sodann zur Aufnahme des Fahrradmantels dienen. Hierbei kann es sich um eine Felge und einen Fahrradmantel handeln, die aufgrund ihrer Ausgestaltung schlauchlos betrieben werden können. Ebenso kann innerhalb des Fahrradmantels ein Fahrradschlauch angeordnet sein.

Ferner ist ein Drucksensor zum Messen eines in einem Fahrradreifen herrschenden Drucks vorgesehen. Der Drucksensor ist hierbei dazu geeignet den Druck sowohl in einem schlauchlosen Reifen als auch in einem, mit einem Fahrradschlauch versersehen Reifen zu messen. Mit dem Drucksensor ist eine Sendeeinheit elektrisch verbunden. Bei der Sendeeinheit selbst handelt es sich insbesondere um eine NFC-Antenne oder eine andere Sendeeinrichtung, die mit einem externen Gerät insbesondere mit einem Mobiltelefon kommunizieren kann, bzw. an das externe Gerät die gemessenen Druckdaten übermitteln kann. Ferner ist mit dem Drucksensor eine Empfangseinheit elektrisch verbunden. Die Empfangseinheit dient zum kontaktlosen Empfangen von Energie und überträgt diese Energie sodann weiter an den Drucksensor. Insbesondere erfolgt die Energieübertragung induktiv.

Vorzugsweise handelt es sich bei der NFC-Antenne um ein passives Bauteil, das zum Übertragen und Empfangen elektromagnetischer Energie dient. In bevorzugter Ausführungsform ist ein elektronisches Bauteil mit dem Drucksensor verbunden. Dieses Bauteil umfasst vorzugsweise einen NFC-Transmitter und einen NFC-Receiver. Besonders bevorzugt ist es, dass der Drucksensor und das elektronische Bauteil in einem einzigen Bauteil zusammengefasst sind, bzw. als integriertes Bauteil ausgebildet sind.

Da der Drucksensor erfindungsgemäß mit der Felge, insbesondere dem Felgenbett verbunden ist oder in Bestandteile der Felge integriert ist, ist es möglich den Drucksensor sowohl für schlauchlose Reifen als auch für Schlauchreifen zu verwenden. Beim Austausch eines Schlauchs erfolgt kein Austausch des Drucksensors oder der mit dem Drucksensor verbundenen Bauteile, wie der Sendeeinrichtung und der Empfangseinrichtung, sodass es sich um eine kostengünstige und nachhaltige Einrichtung zur Druckmessung bei Fahrradreifen handelt.

Vorzugsweise ist der Drucksensor auf einer Innenseite des Felgenbetts angeordnet. Die Innenseite des Felgenbetts ist die der Nabe abgewandte Seite, bzw. diejenige Seite, an der der Reifen, d. h. der Mantel und ein gegebenenfalls vorgesehener Schlauch angeordnet ist.

Besonders bevorzugt ist es, dass der Drucksensor zumindest teilweise in das Felgenbett integriert ist. Hierdurch ist ein zuverlässiges Fixieren des Drucksensors gewährleistet. Bei Felgen aus einem Kunststoffmaterial wie Karbon kann der Drucksensor bei der Herstellung teilweise in das Felgenbett integriert werden, sodass insbesondere nur noch der den Druck aufnehmende Bereich derart frei liegt, dass eine Druckmessung zuverlässig möglich ist.

Die Antenne der Sendeeinrichtung und/oder der Empfangseinrichtung sind vorzugsweise an einer Außenseite einer der Felgenwände angeordnet. Hierdurch ist eine zuverlässige Übertragung der gemessenen Druckdaten sowie ein zuverlässiges Empfangen von Energie sichergestellt. Eine derartige Sende- und/oder Empfangseinrichtung ist in bevorzugter Weiterbildung der Erfindung von einer Schutzschicht überzogen und in besonders bevorzugter Ausführungsform in eine der Felgenwände integriert. Dies ist insbesondere bei einer aus einem Kunststoffmaterial wie Karbon hergestellten Felge bereits bei der Herstellung möglich. Hierdurch ist die Sende- und/oder Empfangseinrichtung, d.h. insbesondere die NFC-Antenne geschützt.

Der Drucksensor, der vorzugsweise zusammen mit dem NFC-Transmitter und dem NFC-Receiver als gemeinsames Bauteil ausgebildet ist, ist elektrisch mit der Sendeeinheit und/oder Empfangseinheit, insbesondere der NFC-Antenne verbunden. Diese Verbindung kann über elektrische Kabel erfolgen. Auch ist eine elektrische Verbindung über einen Ventilschafft möglich. Dies ist insbesondere bei schlauchlosen Reifen zweckmäßig, da das Ventil bei schlauchlosen Reifen nicht oder nur selten ausgewechselt werden muss. Das Nutzen des Ventilschafts zur elektrischen Verbindung hat den Vorteil, dass keine Kabel verlegt werden müssen. Alternativ ist eine elektrische Verbindung auch über das Vorsehen leitfähiger Schichten, die insbesondere aufgedruckt sind, möglich.

In bevorzugter Weiterbildung der Erfindung ist der Drucksensor mit einer Schutzkappe versehen. Durch die Schutzkappe ist eine zuverlässige Druckmessung sichergestellt. Dies ist einerseits derart gewährleistet, dass durch die Schutzkappe eine Verschmutzung des Drucksensors durch das Dichtmittel bei schlauchlosen Reifen vermieden ist. Andererseits ist es durch die Schutzkappe möglich, dass diese an einem Fahrradschlauch anliegt und über die Schutzkappe eine zuverlässige Druckübertragung an den Drucksensor erfolgt. Dies hat den Vorteil, dass ein derart erfindungsgemäß weitergebildeter Drucksensor, sowohl für schlauchlose Reifen als auch für Schlauchreifen verwendet werden kann.

Ein besonderer Vorteil der Erfindung besteht ferner darin, dass durch die Möglichkeit der Energieübertragung es nicht erforderlich ist eine Batterie vorzusehen. Insofern ist auch kein aufwendiger Austausch von Batterien notwendig.

Nachfolgend wird die Erfindung anhand einer bevorzugten Ausführungsform unter Bezugnahme auf die anliegende Zeichnung näher erläutert.

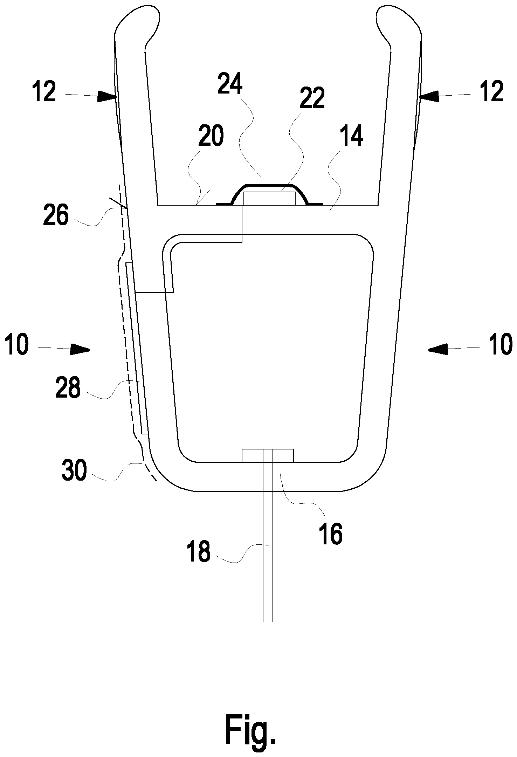

Die Figur zeigt einen schematischen Querschnitt einer bevorzugten Ausführungsform einer erfindungsgemäßen Fahrradfelge.

Die Fahrradfelge weist zueinander gegenüberliegende Felgenwände 10 auf, die in Felgenhörner 12 übergehen. Zwischen den Felgenhörnern 12 ist ein Felgenbett 14 angeordnet. In der Figur ist in montiertem Zustand oberhalb des Felgenbetts 14 der Fahrradreifen angeordnet, wobei ein Fahrradmantel von den Felgenhörnern 12 gehalten wird und innerhalb des Fahrradmantels ein Fahrradschlauch angeordnet sein kann. Bei einem schlauchlosen Reifen ist innerhalb des Fahrradmantels kein Schlauch angeordnet.

Auf einer, bezogen auf das Felgenbett 14, angeordneten gegenüberliegenden Seite der Felge, ist ein die Seitenwände 10 verbindendes Verbindungselement 16 angeordnet, wobei es besonders bevorzugt ist, dass die Seitenwände 10, die Felgenhörner 12, das Felgenbett 14 und auch das Verbindungselement 16 einstückig ausgebildet sind. Mit dem Verbindungselement 16 sind im dargestellten Ausführungsbeispiel Speichen 18 verbunden.

Auf einer Innenseite 20 des Felgenbetts 14 ist ein Drucksensor 22 angeordnet, der von einer Schutzkappe 24 überdeckt ist. Der Drucksensor 22 ist vorzugsweise zusammen mit einem NFC-Transmitter und einem NFC-Receiver als ein Bauteil ausgebildet.

Auf einer Außenseite 26 der in der Figur dargestellten linken Felgenwand 10, ist als Sendeeinheit und Empfangseinheit eine NFC-Antenne 28 angeordnet. Vorzugsweise handelt es sich bei der NFC-Antenne um ein passives Bauteil zum Übertragen und Empfangen von elektromagnetischer Energie. Die NFC-Antenne 28 ist im dargestellten Ausführungsbeispiel durch eine gestrichelt dargestellte Schutzschicht oder Schutzfolie 30 geschützt. Alternativ könnte die NFC-Antenne auch innerhalb der Felgenwand 10 angeordnet sein.

Zur elektrischen Verbindung der NFC-Antenne 28 mit dem Drucksensor 22 sind im dargestellten Ausführungsbeispiel Kabel 32 vorgesehen.

## Patentansprüche

1. Fahrradfelge mit,
einem Felgenbett (14),
zwei mit dem Felgenbett (14) verbundenen Felgenwänden (10),
einem Drucksensor (22) zum Messen eines, in einem Fahrradreifen herrschenden Drucks,
einer mit dem Drucksensor (22) elektrisch verbundenen Sendeeinrichtung (28) und
einer mit dem Drucksensor (22) elektrisch verbundenen Empfangseinrichtung (28) zum kontaktlosen Empfangen von Energie.

2. Fahrradfelge nach Anspruch 1, **dadurch gekennzeichnet, dass** der Drucksensor (22) auf einer Innenseite (20) des Felgenbetts (14) angeordnet ist.

3. Fahrradfelge nach Anspruch 1, **dadurch gekennzeichnet, dass** der Drucksensor (22) zumindest teilweise ist das Felgenbett (14) integrieret ist.

4. Fahrradfelge nach einem der Ansprüche 1 bis 3, **dadurch gekennzeichnet, dass** die Sendeeinrichtung (28) eine NFC-Antenne aufweist, vorzugsweise als NFC-Antenne ausgebildet ist.

5. Fahrradfelge nach einem der Ansprüche 1 bis 4, **dadurch gekennzeichnet, dass** die Empfangseinrichtung (28) in die Sendeeinrichtung (28) integriert ist.

6. Fahrradfelge nach einem der Ansprüche 1 bis 5, **dadurch gekennzeichnet, dass** die Sendeeinrichtung und/oder die Empfangseinrichtung an einer Außenseite (26) einer der Felgenwände (10) angeordnet ist.

7. Fahrradfelge nach Anspruch 6, **dadurch gekennzeichnet, dass** die Sendeeinrichtung und/oder die Empfangseinrichtung mit einer Schutzschicht (30) überzogen ist.

8. Fahrradfelge nach einem der Ansprüche 1 bis 5, **dadurch gekennzeichnet, dass** die Sendeeinrichtung und/oder die Empfangseinrichtung zumindest teilweise in eine der Felgenwände (10) integriert ist.

9. Fahrradfelge nach einem der Ansprüche 1 bis 8, **dadurch gekennzeichnet, dass** der Drucksensor (22) mit der Sendeeinrichtung und/oder der Empfangseinrichtung über Kabel (32) und/oder über einen Ventilschafft und/oder leitfähige Schichten elektrisch verbunden ist.

10. Fahrradfelge nach einem der Ansprüche 1 bis 9, **dadurch gekennzeichnet, dass** der Drucksensor (22) von einer Schutzkappe (24) geschützt ist.

11. Fahrradfelge nach Anspruch 10, **dadurch gekennzeichnet, dass** die Schutzkappe (24) zur Druckübertragung geeignet ist.
